# EUROPEAN PATENT APPLICATION

(11) **EP 4 790 529 A1**
(43) Date of publication of application: **12.08.2026**
(21) Application number: 26157976.7
(22) Date of filing: 11.02.2026
(51) Int. Cl.: G06F 3/041

(54) **SYSTEM AND METHOD FOR INTERACTIVE INPUT SYSTEM WITH MULTIPLE VIDEO INPUTS**

(30) Priority: 11.02.2025 US 202563757012 P
(71) Applicant: SMART Technologies ULC, Calgary, Alberta T2R 0K1 (CA)
(72) Inventor: BOYLE, Michael, Calgary AB T2R 0K1 (CA); HEBERT, Jeremy, Calgary AB T2R 0K1 (CA); LAM, Clinton, Calgary AB T2R 0K1 (CA)
(74) Representative: ip21 Ltd

(57) **Abstract**

A method and system routing interactions to source devices providing video inputs to an interactive input system is provided. The interactive input system (110) includes a display presenting a plurality of video sources (150, 160, 260) in respective regions (120, 130, 140) and an active touch area (112) corresponding to the display. A plurality of touch subregions (122, 132, 142) is dynamically defined within the active touch area (112) that spatially corresponds to the respective regions (120, 130, 140) of the plurality of video sources (150, 160, 260). For each detected touch, a touch subregion is determined from the plurality of touch subregions (122, 132, 142) that contain the detected touch. For the touch subregion, a touch coordinate transformation maps the detected touch to a transformed touch using a coordinate system of a source device associated with the touch subregion. A touch message is routed based on the transformed touch to one of a plurality of destination devices (150, 160, 260) using a virtual USB device instantiated for the touch subregion.

## Description

### Cross-Reference to Related Applications

This application claims the benefit of U.S. Provisional Patent Application No. 63/757,012, filed on February 11, 2025, the entirety of which is hereby explicitly incorporated by reference.

### Field

The present invention relates generally to interactive input systems with multiple video inputs. More particularly, the present invention relates to a method and system for routing interactions to source devices providing video inputs to an interactive input system.

### Background

Multiple users frequently wish to interact with large touch screen displays as input, such as interactive whiteboards, touch-enabled displays such as high-definition televisions (HDTVs), projectors, etc. These interactive input systems include but are not limited to: touch systems comprising touch panels employing analog resistive or machine vision technology to register pointer input such as those disclosed in U.S. Patent Nos. 5,448,263; 6,141,000; 6,337,681; 6,747,636; 6,803,906; 7,232,986; 7,236,162; 7,274,356; and 7,532,206 assigned to SMART Technologies ULC of Calgary, Alberta, Canada, assignee of the subject application; touch systems comprising touch panels or tables employing electromagnetic, capacitive, acoustic, infrared sensor-based technology, or other technologies to register pointer input; laptop and tablet personal computers (PCs); smart phones, personal digital assistants (PDAs) and other handheld devices; and other similar devices. Several methods of identifying individual users are known in the art and disclosed in the references below.

Many models of interactive whiteboards sold by SMART Technologies ULC under the name SMARTBoard^{®} that employ machine vision technology to register pointer input have a tool tray mounted below the interactive whiteboard surface that comprises receptacles or slots for holding a plurality of pen tools as well as an eraser tool. When a tool is removed from its slot in the tool tray, a sensor may detect the removal of that tool allowing the interactive whiteboard to determine that the tool has been selected. SMARTBoard^{®} software in turn processes the next contact with the interactive whiteboard surface as an action from the selected pen tool, whether the contact is from the selected pen tool or from another pointer such as a finger or other object. Although this existing tool tray provides satisfactory functionality, it is desired to improve and expand upon such functionality.

### Summary

Any and/or all aspects as described herein in any and/or all combinations.

According to an aspect, there is provided an interactive input system, comprising: a display presenting a plurality of video sources in respective regions; an active touch area corresponding to the display; a processor in communication with the display and the active touch area; a tangible, computer-readable memory coupled to the processor, the computer-readable memory storing a plurality of instructions that, when executed by the processor, configure the processor to: dynamically define a plurality of touch subregions within the active touch area that spatially corresponds to the respective regions of the plurality of video sources; determine, for a detected touch, a touch subregion from the plurality of touch subregions that contains the detected touch; apply, for the touch subregion, a touch coordinate transformation that maps the detected touch to a transformed touch using a coordinate system of a source device associated with the touch subregion; and route a touch message based on the transformed touch to one of a plurality of destination devices using a virtual USB device instantiated for the touch subregion.

The instructions may further configure the processor to: dynamically update the plurality of touch subregions in response to a change in a size, a position, or an orientation of any of the respective regions of the plurality of video sources. The touch coordinate transformation may comprise an affine transformation including at least a scale and a translation determined from a layout of a corresponding video source.

The instructions may further configure the processor to: instantiate, for the touch subregions, a virtual USB Human Interface Device (HID) and enumerate the touch subregions as an independent touch device associated with each of the touch subregions.

The instructions may further configure the processor to: select a destination device by applying a routing policy that follows a currently active one of the video sources as indicated by an interaction focus within a corresponding touch subregion. The instructions may further configure the processor to: assign monotonic timestamps to the touch message and schedule a transmission to the destination device in alignment with a refresh interval for a video source of the destination device. The detected touch may be associated with a touch subregion that is mapped to an internal computer is routed directly to the internal computer without enumeration to an external destination device. The instructions may further configure the processor to: suspend routing to the destination device for the corresponding touch subregion when the destination device becomes unavailable and automatically resume routing on a reconnection without requiring redefinition of the corresponding touch subregion. The instructions may further configure the processor to: apply per-subregion calibration data including parallax compensation or bezel offset to improve coordinate accuracy of the touch coordinate transformation.

The interactive input system may further comprise a USB hub and a USB switch, wherein the instructions further configure the USB switch to couple the virtual USB device for a selected touch subregion to a corresponding USB output associated with the destination device.

At least one touch subregion may be non-rectilinear, and the instructions may further configure the processor to: determine subregion membership of the detected touch using polygonal hit-testing.

According to another aspect, there is provided a method for routing touch input in an interactive input system having a plurality of video sources. The method may comprise: presenting in respective regions of a display, the video sources from a plurality of destination devices; dynamically defining, by a processor, a plurality of touch subregions that spatially correspond to the respective regions; detecting a touch point on an active touch area corresponding to the display; determining a touch subregion from the plurality of touch subregions that contains the touch point; applying, for the touch subregion, a touch coordinate transformation that maps the touch point to a transformed touch using a coordinate system of a source device associated with the touch subregion; generating a touch message based on the transformed touch; and routing the touch message to one of the destination devices corresponding to the touch subregion.

The method may further comprise dynamically updating the plurality of touch subregions in response to a change in a size, a position, or an orientation of any of the respective regions of the plurality of video sources. The touch coordinate transformation may comprise an affine transformation including at least a scale and a translation determined from a layout of a corresponding video source. The method may further comprise instantiating, for the touch subregions, a virtual USB Human Interface Device (HID) and enumerating the touch subregions as independent touch devices. The method may further comprise selecting a destination device by applying a routing policy that follows a currently active one of the video sources as indicated by an interaction focus within a corresponding touch subregion. The method may further comprise configuring a USB switch to couple a virtual USB device for a selected touch subregion to a corresponding USB output associated with the destination device. The detected touch associated with the touch subregion may be mapped to an internal computer, the touch message is routed directly to the internal computer bypassing an external destination device. The method may further comprise suspending routing to the destination device for the corresponding touch subregion when the destination device becomes unavailable and automatically resuming routing on a reconnection without requiring redefinition of the corresponding touch subregion.

According to another aspect, there is provided a non-transitory computer-readable medium storing a plurality of processor-executable instructions that, when executed by a processor, cause the processor to: dynamically define a plurality of touch subregions within an active touch area that spatially corresponds to respective regions of a plurality of video sources presented on a display; determine, for a detected touch, a touch subregion from the plurality of touch subregions that contains the detected touch; apply, for the touch subregion, a touch coordinate transformation that maps the detected touch to a transformed touch using a coordinate system of a source device associated with the touch subregion; and route a touch message based on the transformed touch to one of a plurality of destination devices using a virtual USB device instantiated for the touch subregion.

### Brief Description of the Drawings

An embodiment will now be described, by way of example only, with reference to the attached Figures, wherein:
Figure 1 shows a high-level architecture of an interactive input system with a plurality of source devices;
Figure 2 shows a block diagram of a computing structure for the interactive input system for managing the plurality of source devices; and
Figure 3 is a flowchart of a process for routing touch points to the plurality of source devices.

### Detailed Description

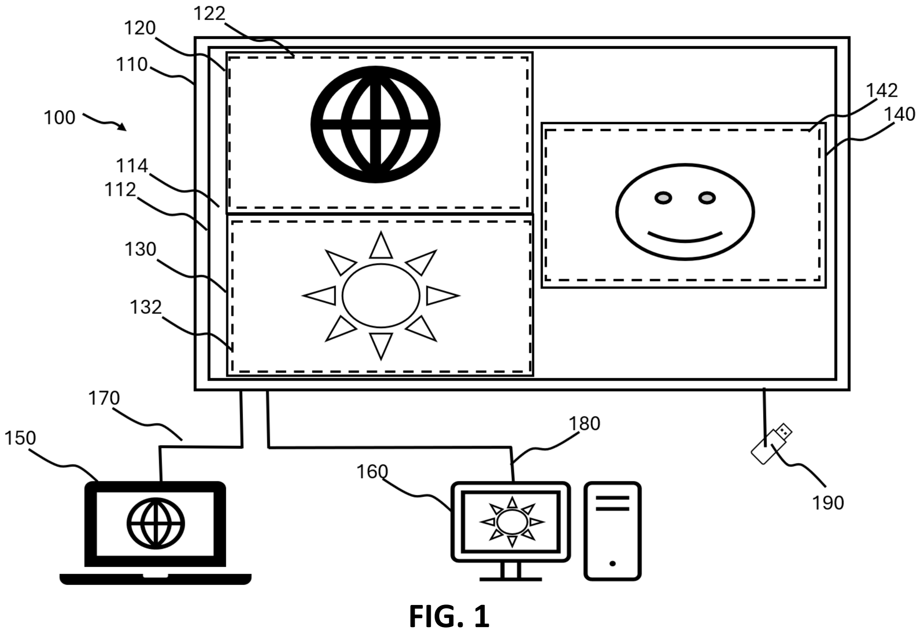

As shown in FIG. 1, a human-computer interface system 100 comprises an interactive input system 110 having an active touch area 112. The active touch area 112 may generally correspond to a display area 114 that may receive a plurality of video sources associated with video display regions 120, 130, 140 to present thereon. In this example, the display area 114 receives and displays three video display regions 120, 130, 140 with one from a laptop or tablet computer 150, one from a desktop computer 160, and one from an internal computer 260 within the interactive input system 110.

In various aspects, the human-computer interface system 100 may be implemented as an integrated assembly that combines display functionality with touch-based or pen-based input capture. The interactive input system 110 may include hardware, firmware, and/or processing logic configured to detect, interpret, and/or report user interactions on or near the display area 114 or surface. The active touch area 112 may correspond to the physical region that can detect such input and may overlay the display area 114 with a high geometric precision. The active touch area 112 may employ capacitive, infrared optical, electromagnetic, or other sensing technologies, each paired with a controller subsystem that may continually scan a sensing matrix, filter noise, identify contact points, determine contact coordinates, and/or generate touch event data or pen event data. Calibration data may be stored in the computer-readable memory 264 aligns one or more sensed coordinates with an actual pixel grid of the display area 114 to ensure input accuracy across the entire surface. In some aspects, the active touch area may support advanced functions such as stylus recognition, pressure sensitivity, tilt detection, hover tracking, and/or palm rejection. The interactive input system 110 may allow the user to directly manipulate one or more graphical elements displayed on the associated display area 114 via touches, gestures, and/or pen strokes that may be accurately captured within the active touch area 112.

The active touch area 112 may be coextensive or substantially coextensive with the display area 114 such that any location at which a user provides input corresponds directly to a spatially aligned portion of the displayed imagery. The correspondence may enable highly intuitive interaction models in which touch input on a region of the active touch area 112 is interpreted as input for the video content currently shown at that location. The display area 114 may be configured to receive video signals from multiple independent video sources in the video display regions 120, 130, 140. A signal-handling subsystem may ingest the video sources via HDMI, DisplayPort, USB-C, wireless casting protocols, and/or other digital interfaces. The display controller may incorporate scaling, timing, and/or color-format conversion functionality to support simultaneous or selective presentation of these sources. A compositing engine may combine or tile the sources into a unified output frame for display, allowing each source to occupy a separate window, region, and/or subdivision of the display area 114. The alignment between the active touch area 112 and the display area 114 may enable input detected over any displayed video source to be attributed to that source and routed back to an originating system.

The display area 114 may concurrently receive and output three independent video streams that correspond to respective regions of the display area 114. The first video display region 120 may originate from a portable computing device 150, such as a laptop or tablet computer, connected to the human-computer interface system 100 via a video interface and an associated data link for return-path touch communication. The second video display region 130 may be provided by a desktop computer 160 via a dedicated cable connection allowing high-resolution video and/or bidirectional data transfer. Both external sources may receive touch or pen events acquired from the active touch area 112 in the form of USB-HID, HID-over-I²C, or other protocol-compliant packets transmitted upstream to the respective host systems. The third video display region 140 may be generated by an internal computer 260 or embedded processor residing within the interactive input system 110 itself. The internal computer 260 may run firmware, operating system components, annotation software, whiteboarding tools, conferencing applications, and/or device-control interfaces. The output from the internal computer 260 may exhibit reduced latency and/or tighter synchronization with the input-capture subsystem as the internal computer feeds video directly into the panel's display pipeline. A video-routing or compositing module may arrange these three video sources in separate windows or regions on the display area 114, enabling simultaneous visualization and interaction with all sources through the unified touch interface.

The display area 114 may provide a multi-screen view with each of the video sources presented in the video display regions 120, 130, 140 being scaled (e.g. resized) and positioned to fit on the display area 114. A video resolution on each of the video sources of the computers 260, 150, 160 may not correspond 1:1 with the video displayed on the display area 114, a video transformation may be determined for each video source of the computers 260, 150, 160.

The display area 114 may be configured to operate as a composite presentation surface capable of simultaneously rendering multiple independent video streams. To achieve such a multi-screen view, the internal computer 260 may execute one or more scaling engines, image processors, and/or graphics compositors that dynamically adjust one or more spatial dimensions of each of the video display regions 120, 130, 140. The scaling operation may include uniform or non-uniform resizing, aspect-ratio preservation, letterboxing, pillar boxing, and/or cropping, depending on the relative dimensions of the incoming source signal and the available display real estate. The compositor may assign each scaled video source to a designated region of the display area 114, such as a tiled grid, side-by-side arrangement, picture-in-picture layout, or user-specified window configuration. Positioning information may be stored as metadata defining x-y coordinates, pixel boundaries, and z-order priority for each video source, allowing the internal computer 260 to deterministically place each video output in a visually organized and non-overlapping presentation. The multi-screen view may be updated in real time as inputs change, and may support dynamic transitions such as animations, smooth scaling, or window dragging executed by the user through the active touch area. The display area 114 may provide a unified interface surface where multiple external computing devices and internal computing devices may be visibly represented and simultaneously accessible.

Because the native resolution and aspect ratio of video sources of the computers 260, 150, 160 may differ from those of the display area 114, direct pixel-to-pixel mapping may not be feasible without distortion or clipping. Accordingly, the internal computer 260 may determine a video transformation for each individual source to produce a visually correct and proportionally accurate representation on the display area 114. Such video transformations may include resolution scaling, aspect-ratio conversion, rotation, mirroring, geometric correction, and color-space transformations. For instance, a source operating at 1920×1080 pixels may be scaled down to fit a window of 1280×720 pixels, while a portrait-oriented tablet output may require a 90-degree rotation and aspect-ratio compensation prior to display. The internal computer 260 may analyze metadata from the incoming video stream, such as pixel clock, signal timing parameters, EDID-negotiated capabilities, HDR format, and color sampling mode, to select an optimal transformation pipeline. In some aspects, the transformation may include temporal adjustments, such as frame-rate conversion, buffering, or synchronization with the panel's refresh interval. By applying a dedicated transformation to each source, all displayed video content maintains clarity, proportional accuracy, and stable rendering regardless of the differing resolutions, formats, or orientations of the originating devices.

In response to the multi-screen view, the interactive input system 110 may subdivide the active touch area 112 into a plurality of touch subregions 122, 132, 142 that align with the video display regions 120, 130, 140 on the display area 114. As shown in FIG. 1, the alignment of the touch subregions 122, 132, 142 with the video display regions 120, 130, 140 has been exaggerated to improve the clarity of the drawing. A touch transformation (e.g., a touch coordinate transformation) may be determined for each of the video display regions 120, 130, 140 so that any touches within the touch subregions 122, 132, 142 may be scaled to a corresponding input source for each of the video sources of the computers 150, 160, 260. In this manner, there is no fixed correspondence between the whole resolution of the active touch area 112, the touch subregions 122, 132, 142, and the video display regions 120, 130, 140 exist. The video input system may dynamically handle format negotiation, scaling, and/or aspect ratio preservation so that the interactive input system 110 can have configurable sizes of video display regions 120, 130, 140.

On establishment of a composite presentation comprising multiple concurrently displayed video display regions 120, 130, 140, the interactive input system 110 may compute a partitioning of the active touch area 112 into one or more touch subregions 122, 132, 142. Each touch subregion may be defined by boundary coordinates that may be deterministically derived from the window geometry, scaling parameters, and/or positional metadata of the corresponding video source as composited on the display area 114. The subdivision may be updated dynamically in response to changes in layout, such as window resizing, repositioning, tiling, picture-in-picture activation, and/or user-initiated drag operations. The interactive input system 110 may maintain a mapping table or transformation graph that associates each touch subregion with a specific video source identifier, thereby enabling rapid hit-testing and routing of touch, pen, and/or gesture events to the correct source device or internal application without ambiguity. The subregions may include non-rectilinear shapes to accommodate rounded corners, bezels, and/or arbitrarily shaped windows, with boundary tests computed using polygonal hit detection or region masks. When the touch subregion is non-rectilinear a subregion membership may be determined using a polygonal hit-testing. The subdivision process may preserve temporal consistency by synchronizing region updates to a refresh interval of the display or input-capture frames to prevent misrouting of user interactions during transitions.

As previously mentioned, the depiction in FIG. 1 is intended to be illustrative rather than to scale to emphasize the spatial relationship between touch subregions and their corresponding video windows to facilitate understanding. In practice, the alignment tolerance may be within a small number of physical pixels or sub-pixel equivalents depending on panel resolution, optical stack properties, and/or calibration parameters. Optical bonding, parallax compensation, and firmware-level coordinate corrections may be employed to reduce apparent offset between a sensed input location and a rendered video content. In this manner, per-subregion calibration data may be applied to improve coordinate accuracy of the touch coordinate transformation. For explanatory clarity, FIG. 1 may show distinct outlines, gaps, or offsets that may not be present or may be imperceptible under normal operating conditions. Such exaggeration does not limit the scope of the aspects, and the system may achieve substantially coextensive alignment between touch subregions and displayed video source regions under nominal conditions.

For each video display region 120, 130, 140, the interactive input system 110 may compute a touch transformation that may map coordinates detected within the associated touch subregion into the coordinate space expected by the corresponding source device or application. Such transformation may comprise a linear transformation or an affine transformation (e.g., scale, translation, rotation, shear), a non-linear warping for lens or a perspective correction, and/or an aspect-ratio adjustment to reconcile differences between the active touch area's physical geometry and the source's logical coordinate system. In some aspects, the touch transformation may include inversion or rotation to accommodate portrait orientations, rotated windows, and/or installations where the display area may be mounted in a non-standard orientations. The transformation parameters may be derived from compositor layout metadata, EDID-negotiated resolutions, panel timing, and any cropping or letterboxing applied during video scaling. The interactive input system 110 may apply the touch transformation to raw contact points and/or to higher-order attributes such as contact area, pen tilt, and pressure and may emit protocol-compliant input reports (e.g., USB HID, HID-over-I²C) to an appropriate destination: upstream over a dedicated data link for the external destination devices, such as the external computers 150, 160, or internally to the input stack for the internal computer 260. In this manner, user interactions may be faithfully interpreted by each source device as if the user interactions occurred on a touch surface natively attached to that respective device.

The interactive input system 110 may decouple a native resolution and coordinate grid from the logical regions and resolutions used for display and input routing. The number of sensing nodes, the spacing, and the controller's reporting resolution need not match the pixel dimensions or aspect ratios of any displayed video source or window. This architectural separation enables arbitrary layouts, including overlapping windows, fractional scaling factors, and/or sub-pixel placement, without requiring reconfiguration of the sensor hardware or firmware. The absence of fixed correspondence permits continuous re-layout, animation, and/or dynamic resizing while maintaining correct input routing via updated transformations. The interactive input system 110 may support heterogeneous video formats and orientations concurrently, allowing each video display region 120, 130, 140 to be presented and interacted with according to its respective optimal resolution and coordinate conventions irrespective of the touch sensor's native sampling grid.

In operation, a video input subsystem may perform automatic capability negotiation with external sources, for example through EDID exchange and, where applicable, HDCP compliance, to establish compatible timing, resolution, color format, and/or frame rate. Following negotiation, the video input subsystem may apply scaling and aspect-ratio management using high-quality resampling filters, letterboxing or pillar boxing as needed, and may crop to satisfy user-selected layouts or maximize displayed area. These processes may be executed per video source and updated dynamically in response to changes in source timing, user commands, or policy-driven presets. The compositor may allocate and resize the video display regions 120, 130, and 140 according to configurable rules, such as equal tiling, prioritized prominence, and/or picture-in-picture placement, while preserving each source's visual integrity. The interactive input system 110 may consume the resulting geometry to recompute touch subregions and corresponding touch transformations, thereby maintaining coherent input routing as video source subregion sizes are changed. Through this dynamic pipeline, the interactive input system 110 may provide flexible, user-configurable multi-screen arrangements without sacrificing accurate input alignment or interaction fidelity.

The laptop/tablet computer 150 and/or the desktop computer 160 (which may be referred to herein as external computers 150, 160) may be connected to the interactive input system 110 via one or more interfaces 170, 180 (e.g., wired, or wireless). In this example, the interfaces 170, 180 may each comprise a video link and one or more bidirectional universal serial bus (USB) links with the video link being received by the display area 114 and the USB links connecting to the interactive input system 110. The interactive input system 110 may also receive one or more USB peripherals 190, such as USB keys, USB microphones, USB video cameras, USB mouse/keyboards, etc. Any standard USB device can be attached. The interactive input system 110 may act as a USB hub 250 for the attached external computers 150, 160 and may support any USB compatible device. The USB peripherals 190 may be shared with the computers 260, 150, 160 as described in further detail herein.

The interfaces 170, 180 may comprise physical or radio-frequency links enabling transport of audiovisual signals, control data, and/or peripheral input/output between the external computers 150, 160 and the interactive input system 110. Wired interfaces may include HDMI, DisplayPort, USB-C with DisplayPort Alternate Mode, Ethernet, and dedicated USB upstream connections, while wireless interfaces may include Wi-Fi based casting protocols, Bluetooth^{™}, Ultra-Wideband, or other short-range data links. The selection of wired versus wireless connectivity may be automatic or user-configurable based on signal quality, available bandwidth, latency requirements, encryption policies, and power delivery needs. In some aspects, the interactive input system 110 may support concurrent operation of multiple interfaces for redundancy or to carry separate planes of traffic (e.g., a video link carried on HDMI and a control/backchannel carried on USB or Ethernet). The interfaces 170, 180 may incorporate authentication and encryption layers (e.g., HDCP for protected video and standard cryptographic handshakes for data channels) to satisfy enterprise or educational security requirements.

In some aspects, each interface 170, 180 may be logically decomposed into a unidirectional or predominantly downstream video path and one or more bidirectional USB paths. The video link may terminate at the display pipeline of the interactive input system 110, specifically at the scaler/compositor feeding the display area 114, so that frames emitted by the connected host may be presented in real time. The USB links may terminate at a controller within the interactive input system 110 responsible for handling HID touch/pen reports, peripheral hub switching, firmware updates, and device telemetry. When the physical medium is a single USB-C cable, the interactive input system 110 may simultaneously negotiate USB Power Delivery, establish DisplayPort Alt Mode lanes for video, and maintain SuperSpeed USB lanes for data, thereby enabling single-cable docking. In other aspects, using separate HDMI and USB cables, the interactive input system 110 may synchronize the video sink and the USB upstream port so that touches over the corresponding video window may be routed back to the correct host. The bidirectional nature of the USB links may allow both upstream (e.g., touch/pen/keyboard/mouse events to the host) and downstream (e.g., host configuration commands, firmware queries, or peripheral enumeration) data flows.

In some aspects, the interactive input system 110 may expose one or more downstream USB ports configured to accept the USB peripherals 190. These USB ports may support multiple USB transfer types (control, bulk, interrupt, and isochronous) to accommodate storage devices (e.g., USB keys), human interface devices (e.g., keyboards, mice, touch digitizers), audio interfaces (e.g., microphones, speakers, headsets), and video capture devices (e.g., webcams, document cameras). The interactive input system 110 may implement USB 2.0 and/or USB 3.x signaling to provide adequate bandwidth for high-definition video capture and multichannel audio while simultaneously supporting low-latency HID traffic. In some aspects, power budgets per port (e.g., BC 1.2 or USB-C downstream ports) may be provisioned to power attached peripherals without external adapters. Per-port authorization, device class filtering, and data-loss-prevention policies may be applied to conform to administrative controls, including read-only mounting or blocking of mass-storage devices in secure deployments.

The downstream ports exposed by the interactive input system 110 may be, in some aspects, compliant with applicable USB standards such that class-compliant devices are enumerated and made operational without the need for vendor-specific drivers on the panel. The system may implement a generic host stack supporting common USB device classes, including but not limited to HID, Mass Storage, Audio, Video (UVC), Communication Device Class (CDC), and Vendor-Specific endpoints. Backward compatibility with earlier USB revisions may be provided through dual-role PHYs and negotiated link speeds. Where necessary, the system may present composite devices and handle interface association descriptors to ensure proper function of peripherals that expose multiple logical interfaces (e.g., a camera with an embedded microphone and hardware controls). In some aspects, enterprise policy engines may impose exceptions to this general capability by restricting or auditing an attachment of certain device classes, without departing from the standard-compliant nature of the ports themselves. In some aspects, the interactive input system 110 may display a message on the display area 114 indicating that the attached USB device is not compliant with the interactive input system 110.

In operation, the interactive input system 110 may function as a managed USB hub 250, presenting one or more upstream ports toward the attached video sources of the external computers 150, 160 and multiple downstream ports toward the USB peripherals 190. The hub may be implemented in hardware, firmware, and/or a combination thereof, and may support advanced features such as selective per-port power switching, over-current protection, and/or port-level reset or disable. Logical switching of the hub's upstream connection may be coordinated with the active video source selection, such that the currently selected or foreground video source gains ownership of shared peripherals (e.g., the camera and microphone follow the active source). In multi-view scenarios, the hub may be partitioned virtually or time-multiplexed to provide concurrent or prioritized access according to user preferences, policy rules, or application demands. The hub controller may advertise and mediate bandwidth allocation for isochronous endpoints to maintain audiovisual quality while servicing interrupt and bulk transfers with low latency. Through this configuration, a broad range of USB-compatible devices may interoperate with whichever host may be currently associated.

Peripheral sharing may be effected via logical switching, virtualization, and/or simultaneous multi-host presentation depending on device class and policy. For example, HID devices may be mirrored to multiple hosts by replicating input reports, while isochronous audio/video devices may be attached exclusively to one host at a time to guarantee stream integrity and bandwidth. In some aspects, the internal computer 260 may arbitrate access to the USB peripherals 190 and may expose them to external destination devices, such as the external computers 150, 160 through USB hub switching, USB device emulation, and/or network-backed sharing protocols. The selection of which host receives which peripheral may follow deterministic rules tied to the active video window, user selection through an on-screen menu, occupancy detection, and/or application focus signals received from the video sources of the computers 260, 150, 160. The interactive input system 110 may maintain states to ensure graceful handoff, including quiescing streams, re-enumerating devices, and/or preserving user privacy by disabling or masking devices during transitions by policy. The destination device may be selected by applying a routing policy that follows a currently active one of the plurality of video sources as indicated by an interaction focus within a corresponding touch subregion.

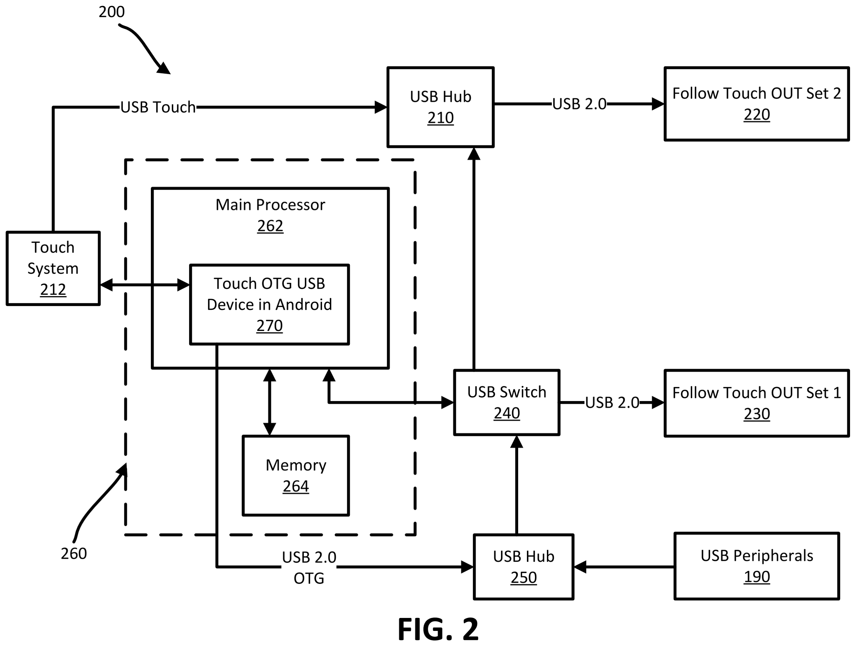

Turning to FIG. 2, a block diagram of a USB system 200 of the interactive input system 110 is shown. The touch system 212 may receive one or more touch points thereon. When the touch points are within the touch subregion 122 associated with the external destination device 150, then the touch system 212 may provide one or more USB touch messages to a USB hub 210. The USB hub 210 may then relay the USB touch messages to the computer 150 via a touch output 220.

FIG. 2 illustrates, in block diagram form, the logical and physical interconnections constituting a USB system 200 embedded within the interactive input system 110. In some aspects, the USB system 200 may comprise a plurality of upstream and downstream ports, one or more hub controllers, a switch or multiplexer fabric, and/or a device-class processing stack that together enable routing of Universal Serial Bus traffic between internal functional modules and the external host computer 150. The depicted arrangement is exemplary and not limiting; additional or fewer ports, cascaded hubs, or integrated hub functionality within a system-on-chip (SoC) may be utilized. The block diagram delineates data pathways for input events originating from the touch system, control and enumeration pathways for device discovery and configuration, and upstream pathways toward one or more external computers 150, 160. Timing relationships between modules may be synchronized with the display pipeline and touch capture cadences to maintain low-latency interaction.

The touch system 212 may detect user interactions as one or more discrete contacts, herein referred to as touch points, which may include single-touch, multi-touch, stylus contacts, and/or gesture-derived abstractions. Each touch point may be assigned by coordinates within the active touch area, and may include attributes such as contact size, pressure, tilt, orientation, and/or temporal information (e.g., timestamp, contact lifecycle state). The touch system 212 may aggregate these measurements into reports produced at a sampling rate and jitter tolerance and may apply filtering, de-bounce, palm-rejection, and/or calibration corrections. The resulting touch data may be formatted for transport to the USB system 200 in a manner compatible with Human Interface Device (HID) class specifications or other protocol definitions supported by the target host(s) of the computers 260, 150, 160. In some aspects, the touch system 212 may support concurrent reporting of multiple contacts (e.g., 10-point, 20-point multi-touch) and may interleave pen and touch channels while preserving source identifiers to enable differentiated handling downstream.

Upon hit-testing the detected touch points against a layout map defining touch subregions 122, 132, 142, when a given touch point lies within the touch subregion 122 that is mapped to external computer 150, the touch system 212 may prepare corresponding USB touch messages addressed for upstream delivery to that host external computer 150. The mapping may be realized through a transformation pipeline that converts the physical sensor coordinates into the logical coordinate space expected by the external computer 150, including any scaling, translation, rotation, and/or aspect-ratio compensation previously determined for the associated video window. The prepared messages may conform to HID multi-touch digitizer report descriptors, including contact identifiers and frame delimiters, or to an alternate class or vendor-specific format as negotiated with the host external computer 150. The touch system 212 may then submit these messages to the USB hub 210 via a downstream device interface exposed by the USB hub 210, which may be through an internal USB device controller that enumerates as a touch digitizer. The transmission may be scheduled to align with display refresh or compositor frames to reduce perceived latency and ensure temporal coherency between visual updates and input reporting.

The USB hub 210 may operate as a managed switching and aggregation element that receives the touch messages from the touch system 212 and forwards the touch messages upstream over a designated path identified as touch output 220 toward the external computer 150. In some aspects, the USB hub 210 may expose multiple upstream ports and may selectively bind the touch device function to the current upstream port associated with the video source corresponding to touch subregion 122, ensuring that input follows the active or designated source. The USB hub 210 may maintain USB transaction integrity, including packet framing, endpoint scheduling (e.g., interrupt transfers for HID), and/or bandwidth allocation, while complying with the power budgeting and the over-current protections. When ownership of the touch system 212 is transferred to a different host, the USB hub 210 may perform a controlled re-enumeration or logical handoff to the new upstream port without disrupting unrelated peripherals. The touch output 220 may constitute an effective upstream conduit through which the external computer 150 receives the touch input as if a native touch digitizer were directly attached to that external computer 150, enabling immediate and accurate interaction with the content displayed for that source.

When the touch points are within the touch subregions 142, 132, then the touch system 212 may provide the USB touch messages to a processor 262 within the interactive input system 110. The processor 262 may be configured to execute one or more On-the-Go (OTG) USB processes 270 from a tangible, computer-readable memory 264 otherwise known as a non-transitory computer-readable medium, which may generate one or more software-defined USB devices. The OTG USB processes may comprise a plurality of processor-executable instructions that may be executed by the processor 262 from the tangible, computer-readable memory 264. The processor-executable instructions may cause the processor 262 to perform the OTG USB processes 270. In this aspect, the OTG USB process generates a first software-defined USB device for the touch subregion 142 and a second software-defined USB device for the touch subregion 132. When the processor 262 receives the USB touch message, the OTG USB process 270 determines which touch subregion 142, 132 that the touch point is within and selects the appropriate first or second software-defined USB device. The OTG USB process 270 may modify the USB touch message (or generate a new USB touch message) addressed to the selected software-defined virtual USB device. The modified (or new) USB touch message may then be sent to a USB hub 250 and touches to touch subregion 142 may not be presented on the OTG device and may be directly consumed by the internal computer 260 associated with the video source 140 internal to the interactive input system 110.

When the touch system 212 determines that a contact event occurs within either touch subregion 142 or touch subregion 132, both of which may correspond to video sources rendered internally or otherwise managed within the interactive input system 110, the USB system 200 may divert the resulting touch data away from the external hosts and instead forwards these messages to a processor 262. The processor 262 may be implemented as an embedded microcontroller, a system-on-chip (SoC), a general-purpose CPU, or a dedicated USB OTG processor located within the interactive input system 110. The touch system 212 may forward the USB touch messages via an internal USB interface, an inter-processor communication (IPC) channel, shared memory buffer, and/or a virtual USB device controller implemented in firmware. The routing of the touch messages to the processor 262 may enable internal handling, transformation, and/or virtualization of the input events before the touch messages are presented to internal applications or selectively re-exported to the external devices 150, 160. The determination that touch points belong to touch subregions 132, 142 may be based on a hit-testing algorithm that may compare each touch coordinate to the layout boundaries dynamically defined by the multi-screen compositor.

The processor 262 may run a firmware module or software stack enabling USB On-the-Go (OTG) functionality, identified herein as OTG USB processes 270. The OTG USB processes 270 may allow the processor 262 to operate simultaneously as a USB host and as a USB device, depending on the configuration and routing requirements. Through the OTG USB processes 270, the processor 262 may instantiate one or more software-defined USB devices, sometimes referred to as virtual USB devices or USB device emulations. The OTG USB processes 270 may instantiate, for each touch subregion, a virtual USB Human Interface Device (HID) presenting a distinct report descriptor such that each of the touch subregions enumerates as an independent touch device. Such devices may implement arbitrary USB classes, including HID multi-touch digitizers, stylus input devices, and/or composite devices containing multiple logical interfaces. The software-defined USB devices may not correspond to any physical USB hardware but instead operate as abstractions generated and managed entirely by firmware. These virtual devices may selectively present different logical input devices to different sinks, including external hosts, internal applications, and/or virtualized environments. The OTG USB processes 270 may serve as an intermediary translation layer between raw touch events and the final USB HID reports emitted to downstream or upstream ports.

In this aspect, the OTG USB processes 270 instantiate two separate virtual USB devices, each corresponding to a distinct touch subregion. The first virtual device may be associated with touch subregion 142 and may represent a logical HID digitizer or other class-compliant device dedicated to interpreting touch or pen events occurring specifically within that touch subregion 142. The second virtual device may be similarly created for touch subregion 132. Each of these software-defined devices may be assigned unique descriptors, endpoint allocations, and/or USB identifiers, which may allow external hosts of the external computers 150, 160 or internal applications to recognize two virtual devices as independent input interfaces. By creating separate virtual devices for each subregion, the USB system 200 may allow for granular routing, distinct coordinate transformations, and/or differing interaction semantics, such as one subregion being dedicated to an internal user interface while the other functions as an input source for a virtualized environment. The creation of multiple software-defined USB devices may enable simultaneous and isolated handling of input streams from different spatial regions of the active touch area 112.

When receiving a USB touch message from the touch system 212, the processor 262 may invoke the OTG USB processes 270 to examine the associated coordinates, identifiers, and/or metadata to determine the originating touch subregion 122, 132, 142. The determination may be performed using lookup tables, region masks, bounding-box comparisons, and/or coordinate transformation matrices maintained by the processor 262 based on the current layout configuration. When the subregion is identified, the OTG USB process 270 may select the corresponding virtual USB device, the first virtual USB device for touch subregion 142 or the second virtual USB device for touch subregion 132. The selection mechanism of the OTG USB process 270 may ensure that each touch event is routed to the correct logical USB interface, preserving a separation of interaction domains and maintaining consistent application behavior. The OTG USB process 270 may enable different subregions of a single physical touch panel to appear as entirely separate devices to upstream consumers while sharing a common sensing substrate.

In some aspects, the OTG USB process 270 may perform transformation or rewriting of the USB touch message before forwarding the modified USB touch message to the chosen virtual USB device. The modification may include scaling coordinates to match the logical resolution of the device, translating positions to the expected origin, rotating coordinate axes, applying aspect-ratio adjustments, and/or injecting additional metadata such as contact IDs, frame boundaries, and/or stylus attributes. The OTG USB processes 270 may discard the original message entirely and construct a new HID report or vendor-specific USB packet that conforms to the descriptor set of the selected virtual device. The modifications may ensure full compatibility with the USB host expectations and allow the OTG USB processes 270 to present consistent and correctly formatted input data despite varying subregion sizes, orientations, and/or display transformations. The newly generated USB touch message or the modified USB touch message may then be enqueued for delivery as if it originated from a distinct USB device.

After modification, the modified USB touch message may be forwarded to a USB hub 250 internal to the interactive input system 110, which manages upstream routing to hosts or internal consumers. In some aspects, the touch events associated with touch subregion 142 may be designated for internal consumption and therefore bypass presentation through the virtual USB devices created by the OTG USB processes 270. Instead, such internal touch messages may be delivered directly to the internal computer 260 associated with the video display region 140 for immediate processing by local applications such as whiteboarding, annotation, and/or system user interface control. The internal consumption pathway may enable extremely low latency, avoid unnecessary USB enumeration steps, and/or ensure that internal software receives touch events natively without exposing the USB messages to the external computers 150, 160. The USB hub 250 may function both as a transport for virtualized devices and as a switching element that protects certain touch streams from external exposure, depending on system configuration and subregion assignment.

The processor 262 may configure the USB switch 240 to a selected USB output 230. The selected USB output 230 may be routed to the external computers 150, 160 (and/or other computers not shown for clarity). In this manner, the USB switch 240 may couple the virtual USB device for a selected touch subregion to a corresponding USB output associated with the destination device. In some aspects, the USB switch 240 may switch the USB output to USB hub 210 for reception by the internal computer 260.

In some aspects, the processor 262 may be operable to assert one or more control signals that govern the routing state of the USB switch 240. The USB switch 240 may comprise a multi-pole, multi-throw electronic switching matrix, an integrated USB cross-point switch, a high-speed USB multiplexer, and/or a logically equivalent switching subsystem capable of selectively coupling downstream virtual or physical USB device endpoints to one of several available upstream outputs. The configuration operations performed by the processor 262 may include writing to memory-mapped registers, issuing commands over an inter-integrated circuit (I²C) bus, SPI link, or internal control bus, and/or updating a firmware-managed routing table. The selected USB output 230 may be determined based on the currently active video source, a user selection event, policy-driven device ownership rules, and/or dynamic peripheral arbitration conditions. Through the programmable configuration, the processor 262 may enable the USB switch 240 to route input reports, device descriptors, and/or data traffic originating from the virtual USB devices and/or physical USB devices within the interactive input system 110 to the assigned receiving host.

In some aspects, the USB switch 240 may direct the selected USB output 230 to the desktop computer 160, which is connected via an upstream USB link for receiving input events, enumerating USB peripherals, and/or interacting with software-defined devices generated by the interactive input system 110. The selected USB output 230 may alternatively or additionally be directed to one or more hosts of the external computers 150, 160 not explicitly illustrated, such as a laptop docking port, auxiliary computing module, thin-client device, or a remote compute appliance connected through an extended USB transport. The processor 262 may dynamically select which external device receives the active USB routing based on workspace layout, which video source is currently in focus, user interaction patterns, and/or predetermined assignment profiles. In some aspects, the USB switch 240 may support automatic failover, wherein when the external computer 160 becomes disconnected or unresponsive, the USB output 230 may be reassigned to an alternative host without interrupting ongoing internal processes. In this manner, the USB switch 240 may suspend routing to the destination device for a corresponding touch subregion when the destination device becomes unavailable and automatically resume routing on a reconnection without requiring a redefinition of the corresponding touch subregion. The selected USB output pathway may enable the interactive input system 110 to act as a shared USB peripheral for multiple computing endpoints in a flexible and seamless manner.

In another operational mode, the processor 262 may instruct the USB switch 240 to reroute the USB output toward the USB hub 210 rather than an external host of the external computers 150, 160. When routed to the USB hub 210, the internal computer 260, embedded within the interactive input system 110 may enumerate and consume the USB devices or input reports as if they were directly attached to the internal computer 260. This routing mode enables internal consumption of touch events, pen data, peripheral signals, and/or software-defined USB devices without exposing such input to any external computer, thereby supporting secure internal user interface interactions, annotation applications, and/or system-level control functions. The USB hub 210 may also facilitate simultaneous access by the internal computer 260 to additional downstream USB peripherals, including cameras, keyboards, or removable storage devices, thereby consolidating local device management. Routing the USB output to the internal computer 260 may allow low-latency processing, avoid unnecessary external USB negotiations, and/or support scenarios where the internal computer 260 may be the active or dominant content displayed on the multi-screen layout. Consequently, the USB switch 240 may enable flexible and context-aware routing between internal and external computing resources based on a current system state.

In another aspect, the USB peripherals 190 may be received by the USB hub 250. The USB hub 250, in conjunction with the USB switch 240 may enable sharing of the USB peripherals 190 to any of the USB outputs 220, 230.

The interactive input system 110 may expose one or more downstream USB ports logically terminated at the USB hub 250, thereby enabling attachment and enumeration of USB peripherals 190 such as storage devices, cameras, microphones, keyboards, mice, and other class-compliant devices. The USB hub 250 may implement SuperSpeed (USB 3.x) and High-Speed (USB 2.0) signaling to accommodate both bandwidth-intensive peripherals (e.g., UVC cameras) and latency-sensitive HID devices. Upon physical connection of a USB peripheral 190, the USB hub 250 may initiate a standard USB enumeration, negotiates link speed, assigns addresses, and/or advertises the device's class interfaces to upstream hosts of the external computers 150, 160 and/or internal computer 260 according to a current routing policy. Power provisioning to the USB peripherals 190 may be enforced by the USB hub 250 through per-port current limits, power switches, and fault detection (e.g., over-current protection), and may support battery charging or USB-C downstream power roles. In some aspects, the USB hub 250 may apply administrative constraints such as class filtering, read-only mounting for mass storage, and/or device quarantine pending authorization, while maintaining compatibility with standard USB descriptor and configuration flows.

In operation, the USB hub 250 may cooperate with the USB switch 240, implemented as a high-speed cross-point switch, multiplexer, or functionally equivalent routing fabric, to selectively couple the downstream USB peripherals 190 to one of several upstream USB outputs, which may include the touch output 220 toward an external host and a general upstream USB output 230 toward another host or internal endpoint. The processor 262 may control the USB switch 240 to effect logical reassignment (or "follow-me" switching) of peripherals based on active video source, user selection, focus state, and/or policy rules, thereby enabling time-multiplexed or exclusive sharing of peripherals among multiple hosts. For isochronous devices such as UVC cameras and USB audio interfaces, the USB system 200 may enforce exclusive attachment to a single upstream output to preserve stream integrity and bandwidth guarantees; for interrupt-driven HID devices, the USB system 200 may mirror reports to multiple outputs or re-enumerate on demand to the newly selected host, depending on configuration. The hub-switch combination may support seamless handover by gracefully terminating endpoints, triggering re-enumeration events, and/or restoring device state where applicable, thus minimizing disruption during switching. Through this coordinated architecture, any of the USB peripherals 190 may be programmatically presented to, or withdrawn from, any of the USB outputs 220, 230, enabling flexible, policy-driven peripheral sharing across internal computer 260 and external computers 150, 160.

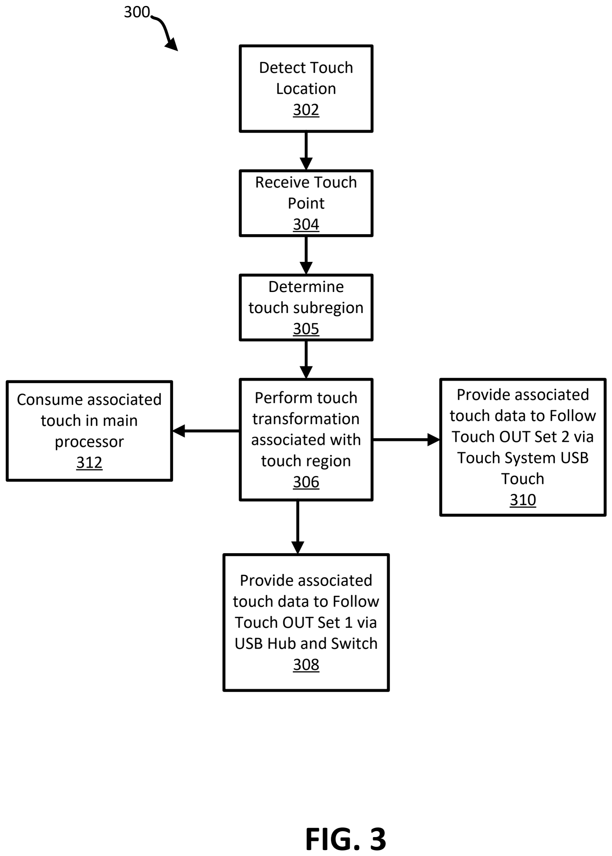

Turning to FIG 3, a process 300 to route touch points to one or more video sources of the computers 150, 160, 260 from the interactive input system 110. The touch system 212 may detect and locate one or more touch events at step 302. The processor 262 may receive one or more touch points from the touch system 212 at step 304. The processor 262 may determine the touch subregion 122, 132,142 associated with the location of the touch point at step 305. The processor 262 may then perform a touch transformation associated with the selected touch region at step 306. The processor 262 may then provide a touch message generated by the touch transformation process to one or more of three different endpoints: (at step 312) to the internal computer 260 associated with touch subregion 142; (at step 310) to the USB host of the external computer 150 associated with touch subregion 122 on Follow Touch Out Set 2 via the touch system USB device; or (at step 308) to the USB host of the external computer 160 associated with touch subregion 132 on Follow Touch Out Set 1 via the USB hub 250 and the USB switch 240.

Specifically, FIG. 3 depicts, in flowchart form, a process 300 illustrating the logical routing of touch input events originating from the interactive input system 110 to one of several possible destination devices, including external computers 150, 160 as well as an internal computer 260. The process 300 may be executed by firmware, dedicated hardware state machines, and/or a combination system-on-chip architecture that synchronizes input capture, coordinate transformation, hit-testing logic, and USB routing. The process 300 may operate continuously or in response to new touch samples and may be synchronized with frame boundaries of the display compositor to ensure coherent projection of touch interaction with the video content rendered on the display. FIG. 3 thereby provides a structured representation of how the USB system 200 decides, at runtime, which device should receive which touch input, based on the dynamic arrangement of subregions and the mapping logic maintained by the interactive input system 110.

At step 302, the touch system 212 performs a sensing cycle in which the underlying touch hardware, such as capacitive sensing arrays, infrared optical grids, or electromagnetic digitizer systems, captures raw contact signals, which are then processed to identify touch events. The touch events may include the initial detection of a touch, continuation of an existing touch, gesture movements, stylus interactions, and/or multi-touch contact patterns. The touch system 212 may execute filtering and stabilization algorithms, such as centroid calculation, smoothing, temporal hysteresis, and noise rejection, to isolate true contact points and determine one or more precise coordinates within the active touch area 112. The detection step may occur at high frequency (e.g., 100-240 samples per second) to ensure low-latency responsiveness and high spatial resolution. The touch system 212 may tag each touch event with a monotonic timestamp and identifier metadata that may be used by downstream processes for accurate synchronization and gesture recognition. In this manner, the touch system may assign the monotonic timestamps to the touch messages and schedule a transmission to the destination device in alignment with a refresh interval for a video source of the destination device

At step 304, the touch data generated by the touch system 212 may be transmitted to the processor 262 using an internal communication protocol, which may include an internal USB device controller interface, serial peripheral interface (SPI), I²C, shared memory buffers, or a specialized inter-processor communication channel. The processor 262 may receive the incoming stream of touch points, each containing positional, temporal, and/or contact-specific attributes. Upon receipt, the processor 262 may queue the touch points in an event buffer, perform preliminary validation, and/or prepare the data for subsequent hit-testing. Depending on implementation, the processor 262 may correct coordinate distortion, apply interpolation for partial sampling frames, and/or tag the touch points with frame IDs to preserve alignment with the video composition pipeline. This step 304 may serve as a bridge between the raw touch hardware and the logic responsible for determining the eventual routing of the input events.

At step 305, the processor 262 may execute a region-detection algorithm to determine which of the predefined touch subregions 122, 132, 142 contains the coordinates of each detected touch point. The touch subregions 122, 132, 142 correspond to windows or zones on the display area 114 where individual video sources are currently presented. The processor 262 may rely on dynamically updated subregion boundary definitions provided by the layout compositor, which may include rectangular boundaries, polygonal regions, and/or regions with non-axis-aligned edges depending on window arrangement. Hit-testing may be performed through coordinate comparison, region mapping tables, and/or affine-transformed boundary checks when rotated or scaled windows are present. In some variations, the processor 262 may also track overlapping windows or z-order rules to handle complex interface scenarios. Once the appropriate subregion is identified, the processor 262 may associate the touch event with the corresponding device target.

In step 306, the processor 262 may apply a region-specific touch transformation to convert the physical touch coordinates into logical coordinates consistent with the resolution and orientation expected by the computers 260, 150, 160 associated with the touch subregions 122, 132, 142. The transformation may scale the coordinates to match the native video resolution of the external computers 150 160, translate the coordinates to match window position, and/or rotate or flip the axes for portrait orientations or unconventional display alignments. For the internal computer 260, the transformation may additionally account for user interface scaling factors, compositor transforms, or pen-specific calibration curves. The transformation engine may perform matrix multiplication, lookup tables, and/or interpolation models to perform high-precision mapping. The result of the transformation may be a device-ready set of coordinates that accurately represents the user's intent within the context of the displayed content.

At this routing stage, the processor 262 may determine the correct endpoint for the transformed touch message and deliver the touch message accordingly. For touch events mapped to touch subregion 142, corresponding to the internal display content handled by the internal computer 260, the transformed touch message is delivered directly to the internal input-handling subsystem via an internal communication pathway (at step 312). For touch events within touch subregion 122, associated with an external USB host of the external computer 150, the message is encapsulated into an appropriate HID report and transmitted through Follow Touch Out Set 2 via the touch system's dedicated USB device interface (at step 310). For touch events within touch subregion 132, corresponding to external USB host of the external computer 160, the message may be routed to the USB hub 250 where the touch message may be relayed through the USB switch 240 to the upstream port associated with desktop computer 160 as part of Follow Touch Out Set 1 (step 308). The routing mechanism may route the touch messages to each host so that each host receives only the touch events originating within the respective designated subregion, while maintaining isolation between internal and external processing domains.

In some aspects, although the foregoing description may specify that the interactive input system 110 performs or executes certain steps, operations, or processes, these steps, operations, or processes may alternatively be performed by the internal computer 260. Accordingly, the assignment of functionality to the interactive input system 110 is not intended to be limiting; rather, the internal computer 260 may execute any portion or all the described processing, routing, transformation, or control logic, either exclusively or in cooperation with the interactive input system 110. In this manner, the system architecture may delegate or redistribute processing tasks between the interactive input system 110 and the internal computer 260 without departing from the scope of the present disclosure.

In other aspects, the interactive input system 110 may determine the touch subregion associated with a detected touch using techniques different from those expressly described. For example, instead of using rectangular subregion boundaries tied to fixed window positions, the interactive input system 110 may employ dynamically computed polygonal regions that correspond to irregularly shaped video windows, curved display surfaces, or non-orthogonal multi-source layouts. In still other aspects, the subregion determination may be performed by the internal computer 260 rather than the interactive input system 110, with the subregion boundaries pushed or synchronized to the touch controller at runtime. In each of these cases, the mapping of touch coordinates to a particular video source remains consistent with the principles described herein.

Although certain aspects describe the processor 262 executing a specific affine or linear transformation based on window size and position, alternative embodiments may incorporate more complex transformation logic. Such alternatives may include perspective-corrected mappings for angled displays, multi-stage transformations for systems with cascaded or tiled displays, or transforms that incorporate pen-specific calibration values, pressure scaling, or handedness adjustments. In some aspects, the touch transformation may be executed partly or entirely by the internal computer's GPU or compositor engine rather than the processor 262 of the interactive input system 110, with the final transformed coordinates returned to the interactive input system 110 for USB packaging.

In some aspects, the routing of transformed touch messages may differ from the specific arrangements shown. For example, the USB switch 240 may be omitted entirely, and the OTG-generated software-defined USB devices generated by the OTG USB process 270 may be exposed through a single upstream port, with logical host selection performed by dynamic re-enumeration rather than switch-based handoff. In another aspect, the USB system 200 may present a composite USB device containing multiple HID interfaces with one per touch subregion so that each external host enumerates only the interface corresponding to its subregion. Still further, the internal computer 260 may intercept and consume selected interfaces locally while forwarding others to external hosts, enabling hybrid internal/external interaction modes.

Other aspects may vary how video sources are displayed and how the corresponding touch subregions are generated. For instance, the display may present overlapping or layered video windows, and the corresponding touch subregions may include z-order rules such that only the topmost source receives touch input. In another aspect, the display may automatically snap or merge subregions when two video sources are tiled together, generating a unified touch-handling region that routes transformed touches to multiple endpoints in a split-event or mirrored-event configuration. In yet another aspect, the interactive input system 110 may support wireless video sources whose display latency varies, and the interactive input system 110 may time-synchronize the corresponding touch transformations so that touch events are dispatched in alignment with frame delivery timing of the wireless source. The video sources may be received wirelessly, and a corresponding touch subregion may be maintained spatial registration with a window presenting that wireless source.

The foregoing description is provided to illustrate certain embodiments and is not intended to be exhaustive or limiting. Variations and modifications will be apparent to those skilled in the art in view of the teachings herein, and any such variations or modifications may be made without departing from the scope of the claimed subject matter. The configurations, components, and processing flows described may be substituted with functionally equivalent alternatives, rearranged in order, or implemented in different combinations in accordance with specific design or implementation preferences.

Although operations, processes, or decision steps are described as being performed by specific components or modules, such assignments are not intended to be restrictive. Any of the described functionalities may be redistributed among the interactive input system 110, the internal computer 260, external processors, firmware modules, or dedicated hardware accelerators, either individually or in any combination thereof. The scope of the present disclosure therefore encompasses implementations in which tasks are performed by different entities than those expressly identified.

Additionally, while the aspects described herein may reference display configurations, interface technologies, USB architectures, or communication pathways, the concepts may be equally applicable to systems employing different video formats, touch technologies, or peripheral-routing infrastructures. The described principles may be applied to wired or wireless implementations, to single-panel or multi-panel displays, and to systems integrating additional input or sensing modalities without departing from the scope of the invention.

Accordingly, the description and drawings are not intended to limit the invention to the precise forms disclosed but instead are intended to cover all alternatives, equivalents, and variations that fall within the spirit and scope of the appended claims. The claims are to be interpreted in accordance with established principles of patent law, and no feature, element, or operation should be regarded as essential unless expressly recited in each claim.

The above-described embodiments are intended to be examples and alterations and modifications could be affected thereto, by those of skill in the art, without departing from the scope, which is defined solely by the claims appended hereto.

## Claims

1. An interactive input system, comprising:
a display presenting a plurality of video sources in respective regions;
an active touch area corresponding to the display;
a processor in communication with the display and the active touch area;
a tangible, computer-readable memory coupled to the processor, the computer-readable memory storing a plurality of instructions that, when executed by the processor, configure the processor to:
dynamically define a plurality of touch subregions within the active touch area that spatially corresponds to the respective regions of the plurality of video sources;
determine, for a detected touch, a touch subregion from the plurality of touch subregions that contains the detected touch;
apply, for the touch subregion, a touch coordinate transformation that maps the detected touch to a transformed touch using a coordinate system of a source device associated with the touch subregion; and
route a touch message based on the transformed touch to one of a plurality of destination devices using a virtual USB device instantiated for the touch subregion.

2. The interactive input system of claim 1, wherein the instructions further configure the processor to: dynamically update the plurality of touch subregions in response to a change in a size, a position, or an orientation of any of the respective regions of the plurality of video sources.

3. The interactive input system of either claim 1 or claim 2, wherein the touch coordinate transformation comprises an affine transformation including at least a scale and a translation determined from a layout of a corresponding video source.

4. The interactive input system of any one of the preceding claims, wherein the instructions further configure the processor to: instantiate, for the touch subregions, a virtual USB Human Interface Device (HID) and enumerate the touch subregions as an independent touch device associated with each of the touch subregions.

5. The interactive input system of claim 3, wherein the instructions further configure the processor to: select a destination device by applying a routing policy that follows a currently active one of the video sources as indicated by an interaction focus within a corresponding touch subregion.

6. The interactive input system of claim 5, further comprising a USB hub and a USB switch, wherein the instructions further configure the USB switch to couple the virtual USB device for a selected touch subregion to a corresponding USB output associated with the destination device.

7. The interactive input system of either claim 5 or claim 6, wherein the instructions further configure the processor to: assign monotonic timestamps to the touch message and schedule a transmission to the destination device in alignment with a refresh interval for a video source of the destination device.

8. The interactive input system of any one of claims 5 to 7, wherein the detected touch associated with a touch subregion that is mapped to an internal computer is routed directly to the internal computer without enumeration to an external destination device.

9. The interactive input system of any one of claims 5 to 8, wherein the instructions further configure the processor to: suspend routing to the destination device for the corresponding touch subregion when the destination device becomes unavailable and automatically resume routing on a reconnection without requiring redefinition of the corresponding touch subregion.

10. The interactive input system of any one of the preceding claims, wherein the instructions further configure the processor to: apply per-subregion calibration data including parallax compensation or bezel offset to improve coordinate accuracy of the touch coordinate transformation.

11. The interactive input system of any one of the preceding claims, wherein at least one touch subregion is non-rectilinear, and the instructions further configure the processor to: determine subregion membership of the detected touch using polygonal hit-testing.

12. A method for routing touch input in an interactive input system having a plurality of video sources, the method comprising:
presenting in respective regions of a display, the video sources from a plurality of destination devices;
dynamically defining, by a processor, a plurality of touch subregions that spatially correspond to the respective regions;
detecting a touch point on an active touch area corresponding to the display;
determining a touch subregion from the plurality of touch subregions that contains the touch point;
applying, for the touch subregion, a touch coordinate transformation that maps the touch point to a transformed touch using a coordinate system of a source device associated with the touch subregion;
generating a touch message based on the transformed touch; and
routing the touch message to one of the destination devices corresponding to the touch subregion.

13. The method of claim 12 comprising dynamically updating the plurality of touch subregions in response to a change in a size, a position, or an orientation of any of the respective regions of the plurality of video sources.

14. The method of either claim 12 or claim 13, wherein the touch coordinate transformation comprises an affine transformation including at least a scale and a translation determined from a layout of a corresponding video source.

15. The method of any one of claims 12 to 14 comprising instantiating, for the touch subregions, a virtual USB Human Interface Device (HID) and enumerating the touch subregions as independent touch devices.

16. The method of claim 15 comprising selecting a destination device by applying a routing policy that follows a currently active one of the video sources as indicated by an interaction focus within a corresponding touch subregion.

17. The method of claim 16 comprising configuring a USB switch to couple a virtual USB device for a selected touch subregion to a corresponding USB output associated with the destination device.

18. The method of either claim 16 or claim 17, wherein the detected touch associated with the touch subregion is mapped to an internal computer, the touch message is routed directly to the internal computer bypassing an external destination device.

19. The method of any one of claims 16 to 18 comprising suspending routing to the destination device for the corresponding touch subregion when the destination device becomes unavailable and automatically resuming routing on a reconnection without requiring redefinition of the corresponding touch subregion.

20. A non-transitory computer-readable medium storing a plurality of processor-executable instructions that, when executed by a processor, cause the processor to:
dynamically define a plurality of touch subregions within an active touch area that spatially corresponds to respective regions of a plurality of video sources presented on a display;
determine, for a detected touch, a touch subregion from the plurality of touch subregions that contains the detected touch;
apply, for the touch subregion, a touch coordinate transformation that maps the detected touch to a transformed touch using a coordinate system of a source device associated with the touch subregion; and
route a touch message based on the transformed touch to one of a plurality of destination devices using a virtual USB device instantiated for the touch subregion.
